# FASCICULE DE BREVET EUROPEEN

(11) **EP 2 522 025 B1**
(45) Date de publication et mention de la délivrance du brevet: **25.03.2020**
(21) Numéro de dépôt: 11705002.1
(22) Date de dépôt: 04.01.2011
(51) Int. Cl.: H01F 38/14

(54) **SYSTEME D'ALIMENTATION PAR INDUCTION ET MEUBLE POUR UN TEL SYSTEME**
INDUKTIONSAUSGABESYSTEM UND GEHÄUSE FÜR EINE SOLCHES SYSTEM
INDUCTION SUPPLY SYSTEM AND HOUSING FOR SUCH A SYSTEM

(30) Priorité: 05.01.2010 FR 1000025
(43) Date de publication de la demande: 14.11.2012
(73) Titulaire: Phlox, 13100 Aix-en-Provence (FR)
(72) Inventeur: BLANC, Christophe, F-84160 Lourmarin (FR); CHAZALLET, Frédéric, F-13013 Marseille (FR)
(74) Mandataire: Marchand, André
(86) Numéro de dépôt international: PCT/FR2011/000003
(87) Numéro de publication internationale: WO 2011/083259

(56) Documents cités:
- WO-A2-2008/001272
- FR-A1- 2 266 101
- FR-A3- 2 695 285
- GB-A- 1 473 582
- US-A- 5 264 997

## Description

### DOMAINE TECHNIQUE

La présente invention est relative à un système d'alimentation par induction d'un appareil, en particulier d'alimentation d'un appareil d'éclairage à diodes luminescentes (LEDs), et à un meuble ou une construction équipé(e) pour l'alimentation par induction d'un tel appareil.

### ETAT DE LA TECHNIQUE

Le brevet US-5264997 décrit un appareil d'éclairage à diodes électroluminescentes (LEDs) alimenté par induction.

L'appareil comporte un boîtier renfermant un circuit imprimé ; un enroulement secondaire formé d'un fil enroulé en spirale est prévu sur une face du circuit imprimé, et les LEDs connectées à l'enroulement secondaire sont disposées sur l'autre face du circuit imprimé.

Le boîtier est solidarisé à une douille comportant un enroulement primaire formant un inducteur pour l'enroulement secondaire. Le boîtier est constitué d'un fond opaque et d'une optique transparente solidarisés par adhésif.

Ce brevet propose de raccorder plusieurs jeux de LEDs en parallèle à l'enroulement secondaire, les LEDs de chaque jeu étant raccordées en série.

Un tel appareil d'éclairage présente un rendement faible et produit un flux lumineux dont l'intensité et la couleur ne sont pas maîtrisées, en raison notamment de la disparité des caractéristiques de LEDs d'un modèle déterminé.

Par ailleurs, il est nécessaire d'adapter le circuit imprimé au nombre et au type de LEDs choisi, et d'adapter le circuit imprimé à la configuration de l'enroulement primaire alimentant ces LEDs.

La demande internationale WO2008012702 décrit un système d'éclairage comportant une base reposant sur le sol et équipée de plusieurs inducteurs, et des modules d'éclairage reposant sur la base et alimentés par celle-ci, par induction.

Les inductances équipant la base et les modules d'éclairage sont également réalisés sous forme de pistes de circuits imprimés.

L'épaisseur de telles pistes est généralement faible. Il en résulte que ces pistes sont fragiles, ne peuvent pas transporter un courant de forte intensité, provoquent des pertes par effet Joule et un échauffement préjudiciable des pistes et du circuit imprimé.

Ces systèmes d'alimentation par induction sont donc réservés à l'alimentation d'appareils consommant très peu d'énergie.

La présence de plaques faiblement ferromagnétiques pour améliorer le couplage entre un inducteur et un induit, ainsi que la présence d'organes de positionnement mécanique mutuel des inductances, rendent difficile l'intégration d'un tel système d'alimentation dans un meuble ou une paroi de construction.

En outre, le contact direct entre un circuit imprimé d'un module d'éclairage et un circuit imprimé de la base, peut provoquer une détérioration mécanique des éléments en contact ainsi que des chocs et accidents électriques.

FR2695285A3 décrit un meuble ou construction selon le préambule de la revendication 1.

### EXPOSÉ DE L'INVENTION

Un objectif de l'invention est de proposer un système d'alimentation par induction qui soit amélioré et/ou qui remédie, en partie au moins, aux lacunes ou inconvénients des systèmes d'alimentation par induction connus.

Un objectif de l'invention est de proposer un meuble ou une construction équipé(e) pour l'alimentation par induction d'un appareil ayant une consommation d'au moins une ou plusieurs dizaine(s) de Watt.

Selon une utilisation de l'invention, on alimente par induction un appareil disposé sur (ou contre) une première face - ou face externe - d'une paroi d'un meuble ou d'une construction, au travers de cette paroi, par l'intermédiaire d'une inductance disposée contre (ou le long) d'une seconde face - ou face interne - de la paroi et traversée par un courant alternatif, l'inductance étant solidaire du meuble - respectivement de la construction - et étant essentiellement constituée de conducteurs épais, de section sensiblement rectangulaire, formant une spirale, et revêtus d'un - ou noyés dans un - matériau électriquement isolant.

Selon un aspect de l'invention, il est proposé un meuble ou une construction selon la revendication 1, et un procédé de fabrication selon la revendication 15.

L'invention s'applique aux meubles et constructions dont la paroi comporte un mélange de matière plastique et de particules minérales.

Selon un mode de réalisation, la paroi est essentiellement constituée d'un mélange de matière plastique et de particules minérales, en particulier d'un mélange de résine acrylique et de quartz ou d'hydrate d'alumine.

L'épaisseur de la paroi est de préférence située dans une plage allant de 1 millimètre environ à 50 millimètres environ.

L'épaisseur du ou des conducteur(s) formant l'inductance est généralement au moins égale à 200 microns, de préférence située dans une plage allant de 0.2 millimètre environ jusqu'à 1 millimètre environ, en particulier de l'ordre de 0.3 à 0.6 millimètre.

La paroi peut s'étendre sensiblement horizontalement ou sensiblement verticalement.

Le meuble ou la construction peut comporter une structure magnétique disposée sensiblement affleurante à la face externe de la paroi, et adaptée pour provoquer, lorsqu'elle est placée dans le champ magnétique d'un aimant solidaire de l'appareil à alimenter, une force d'attraction mutuelle entre l'appareil et le meuble ou la construction, qui est suffisante pour maintenir l'appareil solidaire de la paroi.

L'inductance peut être solidarisée au meuble ou à la construction par collage notamment.

Selon un autre aspect de l'invention, il est proposé un système d'alimentation par induction d'un appareil au travers de la paroi d'un meuble ou d'une construction, selon la revendication 10.

Le générateur peut comporter un pont en « H » dans lequel l'inductance est raccordée en série avec une capacité, et une unité de commande arrangée pour piloter les interrupteurs du pont en « H ».

Le générateur peut comporter un transmetteur radio relié à l'unité de commande et permettant à l'unité de commande de recevoir des données de commande du pont.

Le système d'alimentation peut comporter un appareil de télécommande du générateur et/ou de l'appareil à alimenter, qui comporte un capteur sensible au flux lumineux incident (ambiant), et comporte le cas échéant plusieurs capteurs respectivement sensibles à différentes bandes spectrales du flux lumineux incident (ambiant).

L'appareil de télécommande peut comporter un capteur de mouvement solidaire du boîtier de l'appareil de télécommande, qui permet de détecter des mouvements de l'appareil de télécommande et de modifier en conséquence les signaux de commande délivrés au générateur et/ou à l'appareil à alimenter.

L'inductance peut être simplement fabriquée avec une forme et des dimensions adaptées au meuble/construction ainsi qu'à l'appareil à alimenter, par gravure chimique d'une feuille d'un matériau conducteur tel que du cuivre, puis en recouvrant la pièce ainsi obtenue d'un isolant.

L'inductance ainsi obtenue peut s'étendre le long d'un plan et présente généralement une bonne capacité de déformation qui lui permet d'être conformée à la forme souhaitée pour son intégration dans un meuble ou une construction.

L'invention permet d'obtenir un couplage amélioré entre l'inducteur du meuble/construction et l'induit d'un appareil à alimenter, et permet d'obtenir un rendement amélioré de l'alimentation de l'appareil, dans différentes positions relatives de l'inducteur et de l'induit.

L'invention permet de réaliser simplement un meuble ou une construction adapté(e) pour l'alimentation de divers appareils, en particulier pour l'alimentation d'appareils d'éclairage, d'appareils de traitement de données et leurs périphériques tels qu'écran, clavier, souris, d'enceintes acoustiques, de téléviseurs, ou d'appareils de télécommunication (téléphones et télécopieurs par exemple).

D'autres aspects, caractéristiques, et avantages de l'invention apparaissent dans la description suivante qui se réfère aux figures annexées et illustre, sans aucun caractère limitatif, des modes préférés de réalisation de l'invention.

### BREVE DESCRIPTION DES FIGURES

La figure 1 est un schéma illustrant les principaux composants - et leurs interconnexions - d'un appareil d'éclairage et d'un module d'alimentation par induction de l'appareil d'éclairage, selon un mode de réalisation.
La figure 2 est un schéma illustrant les principaux composants - et leurs interconnexions - d'un appareil d'éclairage selon un autre mode de réalisation.
La figure 3 est un schéma illustrant les principaux composants - et leurs interconnexions - d'un appareil d'éclairage selon encore un autre mode de réalisation.
La figure 4 illustre, en vue en coupe, les principaux composants d'un appareil d'éclairage et un inducteur pour l'alimentation par induction de l'appareil d'éclairage, selon un mode de réalisation.
La figure 5 illustre, en vue en coupe, les principaux composants d'un appareil d'éclairage et un inducteur pour l'alimentation par induction de l'appareil d'éclairage, selon un autre mode de réalisation.
La figure 6 illustre, en vue en coupe, une inductance d'un appareil d'éclairage ou d'un générateur selon un mode de réalisation.
La figure 7 est un schéma illustrant les principaux composants - et leurs interconnexions - d'un module d'alimentation par induction d'un appareil d'éclairage, selon un mode de réalisation.
La figure 8 est un schéma illustrant les principaux composants - et leurs interconnexions - d'un module de télécommande d'un appareil d'éclairage et/ou de télécommande d'un module d'alimentation par induction de cet appareil d'éclairage, selon un mode de réalisation.
La figure 9 illustre, en vue en plan, une inductance d'un appareil d'éclairage ou d'un générateur selon un mode de réalisation.
La figure 10 illustre, en vue en perspective schématique, un meuble équipé d'un système d'alimentation par induction et la figure 11 illustre, du même point de vue que pour la figure 10, le meuble de cette figure auquel est suspendu un appareil d'éclairage.

### DESCRIPTION DETAILLEE DE L'INVENTION

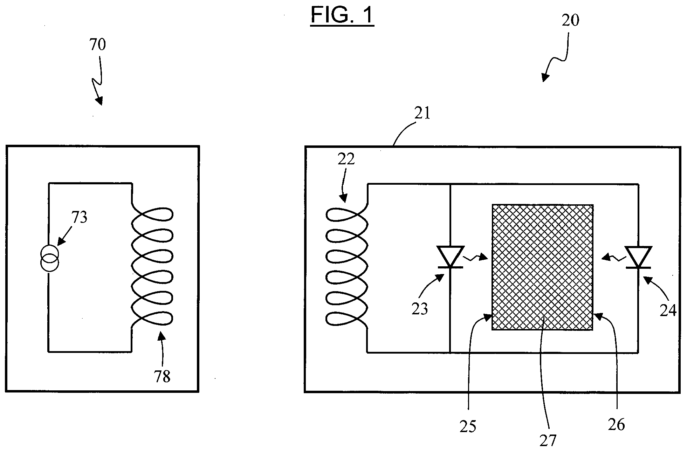

Par référence aux figures 1 à 3 notamment, l'appareil d'éclairage 20 comporte un guide 27 de lumière, mince et transparent, éclairé par ses deux bords ou tranches 25, 26 opposé(e)s, par des LEDs 23, 24 respectivement disposées en regard de ces deux bords.

Selon la puissance lumineuse requise, l'appareil comporte le nombre nécessaire de LEDs qui sont disposées en rangées réparties le long d'une ou plusieurs des faces latérales 25, 26 par lesquelles la lumière émise par les LEDs est introduite dans le guide.

Par référence à la figure 1, les LEDs 23, 24 sont raccordées en parallèle aux bornes d'une inductance 22.

Les LEDs 23, 24 et l'inductance 22 sont disposées à l'intérieur d'un boîtier 21 comportant des parois opaques délimitant une ouverture en regard de laquelle s'étend le guide 27 de lumière.

L'appareil 20 est conçu pour être alimenté par un module 70 d'alimentation qui comporte une inductance 78 connectée aux bornes d'un générateur 73 de courant alternatif.

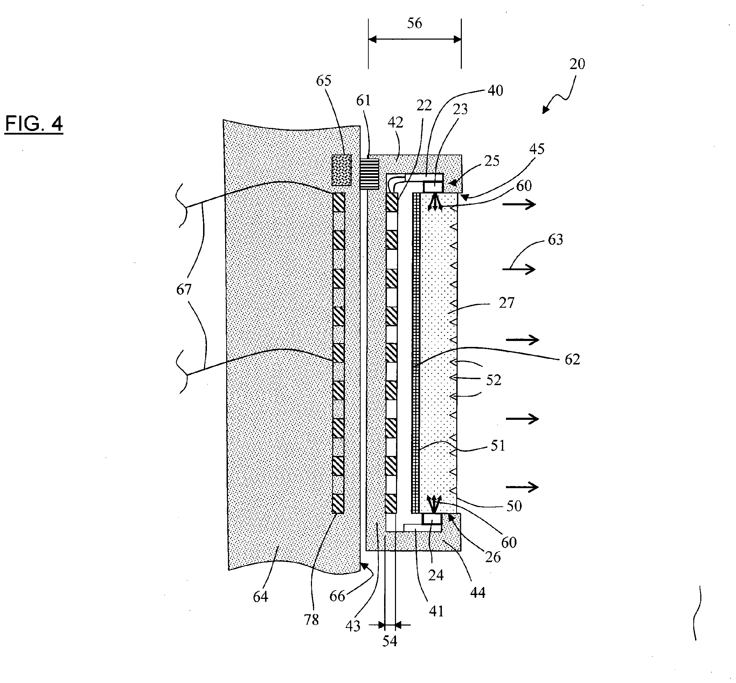

Par référence à la figure 4 notamment, le guide 27 présente deux faces principales 50, 51 (c'est-à-dire les faces de plus grande(s) surface ou dimensions) qui sont sensiblement parallèles, et des faces latérales ou tranches 25, 26 reliant les faces principales 50, 51.

Les faces principales du guide peuvent être planes, notamment lorsque le guide 27 est en forme de plaque plane, ou bien incurvées, par exemple lorsque le guide 27 est en forme de calotte cylindrique ou de plaque cintrée (gauche).

Le guide 27 est réalisé dans un matériau optique tel que du verre, du polycarbonate, ou du polyméthacrylate de méthyle (PMMA), et présente une épaisseur (repère 55 figure 4) située dans une plage allant de un millimètre environ à cinq millimètres environ.

La face principale « avant » 50 du guide est munie de motifs 52 diffusants, et un réflecteur 62 est prévu sur - ou accolé contre - la face « arrière » 51 du guide 27.

Selon un mode de réalisation non représenté, la face principale « arrière » 51 du guide est munie des motifs 52 diffusants. Un réflecteur est prévu sur - ou accolé contre - la face « arrière » du guide, et un film diffuseur est en outre prévu sur - ou accolé contre - la face « avant » du guide 27.

Les motifs ou éléments diffusants 52 peuvent être constitués de saillies ou de dépressions allongées, formées ou disposées sur la face 50.

Les motifs 52 peuvent être essentiellement constituées de rainures formées sur la face 50 à l'aide d'un faisceau laser, dont l'espacement mutuel varie le long d'au moins un axe.

En particulier, l'espacement des rainures peut décroître régulièrement d'une zone périphérique du guide à une zone centrale du guide.

La largeur des rainures diffusantes peut être située dans une plage allant de 50 microns environ à 100 microns environ.

Notamment lorsque le guide est en forme de plaque polygonale, en particulier rectangulaire, les motifs diffusants peuvent s'étendre selon des axes parallèles aux bords du guide, et/ou des axes parallèles aux rangées de LEDs disposées à faible distance de - ou contre - ces bords.

Lorsque le guide est en forme de disque, les motifs diffusants peuvent s'étendre selon des cercles concentriques.

La lumière 60 émise par les LEDs subit des réflexions multiples à l'intérieur du guide 27. Les éléments diffusants 52 provoquent une diffusion de la lumière émise par les LEDs et se propageant dans le guide, vers chacune des deux faces 50, 51 principales opposées du guide 27.

En raison notamment de la présence du réflecteur sur la face 51, les flux lumineux respectivement émis par chacune des LEDs s'ajoutent - se mélangent - et résultent en un flux lumineux homogène 63 qui sort du guide par sa face principale « avant » 50.

Les LEDs 23 et 24 peuvent présenter des spectres d'émission respectifs différents. En particulier, les LEDS 23 présentent un spectre d'émission présentant deux maxima pour deux premières longueurs d'onde, et les LEDS 24 présentent un spectre d'émission présentant deux maxima pour deux secondes longueurs d'onde dont au moins une est distincte des deux premières longueurs d'onde.

Les premières et secondes longueurs d'onde sont généralement situées dans une plage allant de 400 nanomètres environ à 800 nanomètres environ, de sorte que les LEDs 23, 24 peuvent émettre respectivement des flux de lumière « blanche » dont les températures de couleur différent : un flux de lumière bleuâtre dont la température de couleur peut être supérieure à 5500 Kelvin (K), et un flux de lumière jaunâtre dont la température de couleur peut être inférieure à 5500 K, par exemple.

Alternativement ou en complément, certaines des LEDs peuvent émettre dans le domaine de l'infrarouge ou de l'ultraviolet.

Le « mélange », dans le guide 27, des flux lumineux des différentes LEDs permet de compenser les disparités de ces flux « individuels » qui peuvent résulter des disparités constatées pour la tension directe des LEDs d'un modèle déterminé, et à fortiori de compenser les disparités de ces flux résultant de l'emploi de LEDs de modèles distincts - qui présentent des spectres d'émission distincts - .

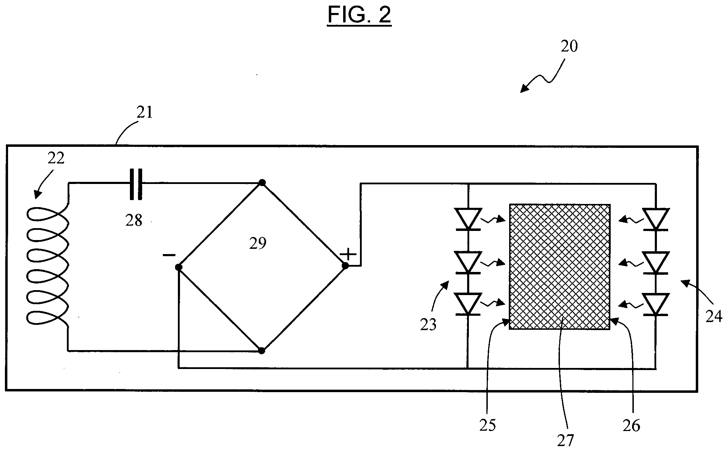

Par référence à la figure 2, l'appareil 20 comporte une capacité 28 et un redresseur 29 raccordés en série avec l'inductance 22.

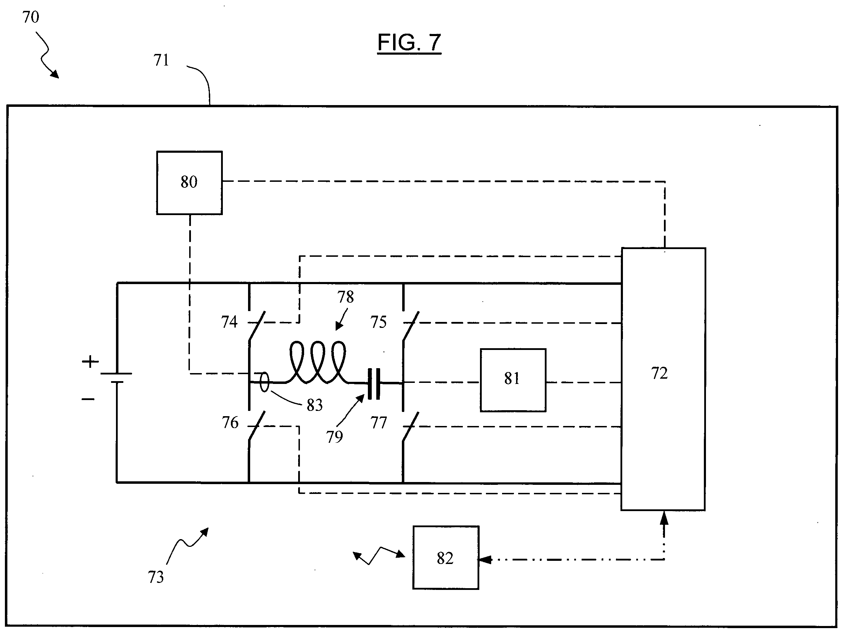

La capacité 28 est choisie pour former, avec l'inductance 22, un circuit oscillant accordé sur - i.e. résonnant à - une fréquence correspondant sensiblement à la fréquence du générateur (repère 70 figures 1 et 7) de courant, dont la valeur peut être située dans une plage allant de 10 à 15 kHz environ, jusqu'à 25 ou 30 kHz environ.

Le redresseur 29 peut être constitué par un pont de diodes délivrant un courant redressé entre ses bornes de sorties, qui alimente au moins deux groupes de LEDS 23, 24 raccordés en parallèle, chaque groupe de LEDs comportant plusieurs LEDS raccordées en série.

Les LEDs 23, 24 de type CMS peuvent être montées sur des circuits imprimés 40, 41 (figure 4) s'étendant en regard des tranches 25, 26 du guide 27.

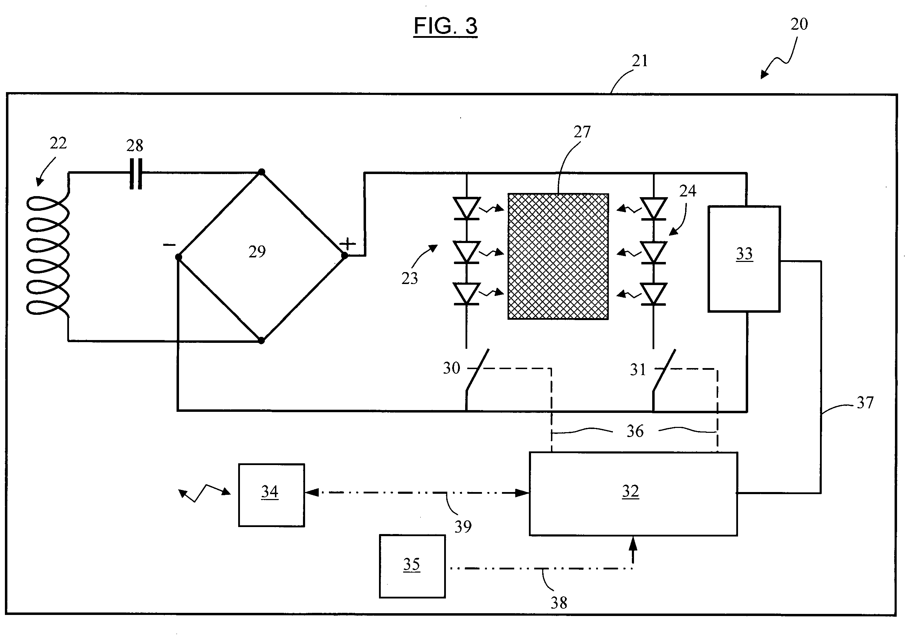

Par référence à la figure 3, l'appareil 20 comporte en outre deux interrupteurs 30, 31 respectivement raccordés en série avec les groupes de LEDs 23, 24.

Chaque interrupteur peut être essentiellement constitué par un transistor, en particulier un transistor à effet de champ de type MOSFET.

L'appareil 20 comporte également une unité de commande 32, telle qu'un micro contrôleur, arrangée (programmée) pour commander l'ouverture et la fermeture des interrupteurs 30, 31, par l'intermédiaire de liaisons 36, pour assurer un éclairement avec l'intensité et le cas échéant la colorimétrie souhaitée.

A cet effet, des modules de commande (non représentés) de type à modulation de largeur d'impulsion (« PWM ») peut être intégrés à l'unité 32 ou interposés entre cette unité et les interrupteurs, pour contrôler l'alimentation des diodes 23, 24.

L'unité de commande 32 est alimentée par un module d'alimentation 33 raccordé aux sorties du redresseur 29, par l'intermédiaire de conducteurs 37.

L'unité de commande 32 est également reliée à un transmetteur 34 de signaux et/ou de données, par une liaison bidirectionnelle 39, ainsi qu'à un capteur 35 de mouvement par une liaison 38.

Le transmetteur 34 peut être essentiellement constitué par un émetteur-récepteur de signaux de commande radio, en particulier un transmetteur Bluetooth®.

Le transmetteur 34 permet à l'unité de commande 32 de recevoir des données de commandes transmises à l'appareil 20 par un autre appareil disposé à proximité de l'appareil 20 et équipé d'un transmetteur compatible avec le transmetteur 34, tel qu'un appareil de télécommande de l'appareil 20.

Le capteur 35 de mouvement peut être essentiellement constitué par un ou plusieurs accéléromètre(s) ou gyromètre(s) solidaires du boîtier 21 de l'appareil 20.

Le capteur 35 peut par exemple comporter deux ou trois accéléromètres respectivement sensibles aux accélérations du boîtier selon deux ou trois axes orthogonaux deux à deux.

Le capteur 35 de mouvement permet à l'unité de commande 32 de détecter des mouvements de l'appareil d'éclairage 20 et de modifier en conséquence les signaux de commande délivrés par l'unité 32 aux interrupteurs 30, 31.

En particulier, l'unité 32 peut être programmée pour faire varier (augmenter ou au contraire diminuer) le flux lumineux émis par les LEDs 23 et/ou par les LEDs 24 en fonction des signaux que lui délivre le capteur 35.

Selon un mode de réalisation, le capteur 35 comporte un premier accéléromètre sensible aux accélérations du boîtier selon un premier axe (une première direction), de manière à permettre à l'unité 32 de faire varier le flux lumineux émis par un premier groupe de LEDs 23 en fonction de mouvements impartis au boîtier par un utilisateur selon cet axe, et le capteur 35 comporte un second accéléromètre sensible aux accélérations du boîtier selon un second axe orthogonal au premier axe, de manière à permettre à l'unité 32 de faire varier le flux lumineux émis par un second groupe de LEDs 24 en fonction de mouvements impartis au boîtier selon ce second axe.

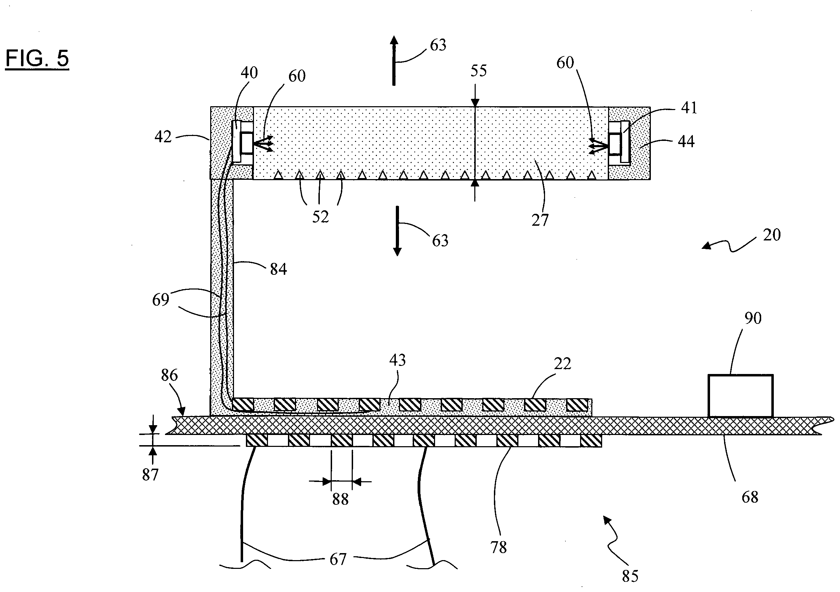

Par référence aux figures 4 et 5, le boîtier comporte une paroi plane 43 formant un fond, et des parois 42, 44 s'étendant à partir de la paroi 43 et délimitant une ouverture 45 qui est fermée par le guide 27.

Les parois opaques 42 à 44 du boîtier et le guide interdisent ainsi la sortie de la lumière 60 injectée par les LEDs dans le guide, hors du boîtier, autrement que par la face avant 50 du guide.

L'inductance 22 est solidaire de la paroi 43 sur la face intérieure de laquelle elle s'étend.

Notamment lorsque le boîtier et la paroi 43 présentent une forme rectangulaire, l'inductance 22 servant d'induit peut être formée par un conducteur présentant une forme de spirale sensiblement rectangulaire ; il peut en être de même concernant l'inductance 78 servant d'inducteur.

L'inductance 22 peut dans certains cas être réalisée sous forme de pistes d'un circuit imprimé, ou par bobinage d'un fil conducteur revêtu d'un isolant; de préférence, cependant, l'inductance 22 est réalisée par découpe ou gravure, à partir d'une feuille d'un matériau conducteur.

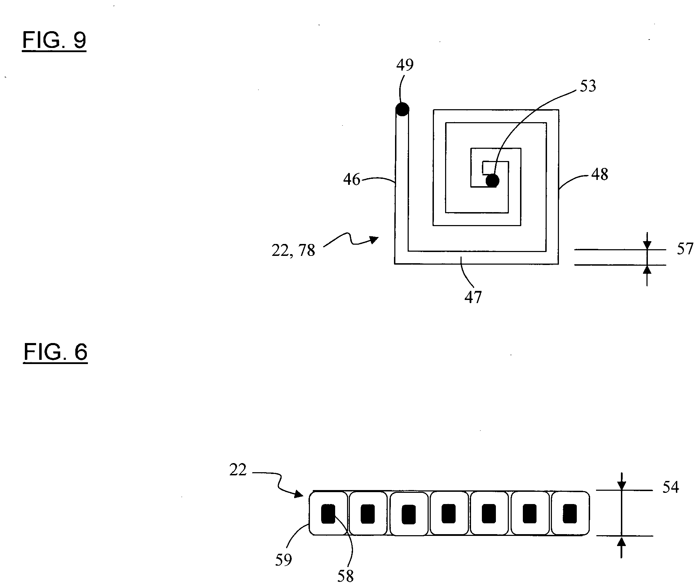

Par référence aux figures 4 et 9 notamment, l'inductance 22 est formée d'une bande ou piste d'un matériau conducteur tel que du cuivre, qui comporte plusieurs segments rectilignes successifs tels que ceux repérés 46 à 48 figure 9.

L'inductance 22 comporte une borne 49, 53 à chacune de ses deux extrémités, pour son raccordement aux composants 28, 29 de l'appareil 20.

L'épaisseur 54 des segments conducteurs de l'inductance 22 peut être située dans une plage allant de 0.2 millimètre environ à 0.6 ou 1 millimètre environ, en particulier de l'ordre de 0.3 à 0.6 millimètre. La largeur 57 de ces segments peut être au moins égale à leur épaisseur.

L'inductance illustrée figure 9 peut être obtenue par gravure ou découpe d'une feuille de cuivre, de façon à ménager un espace suffisant entre deux segments conducteurs adjacents. Le conducteur en spirale ainsi obtenu présente une section sensiblement rectangulaire et peut être revêtu d'un - ou noyé dans un - matériau isolant.

La même technique peut être utilisée pour fabriquer l'inductance 78 du générateur. Dans ce cas, la largeur 88 des segments conducteurs peut être au moins égale au double ou au triple de leur épaisseur 87 (figure 5).

Dans le mode de réalisation de l'inductance 22 qui est illustré figure 6, l'inductance est obtenue par enroulement d'un fil conducteur 58 de section rectangulaire revêtu d'un isolant 59, de façon à former une spirale à « spires » jointives présentant l'épaisseur 54.

Ces procédés de réalisation permettent d'obtenir des inductances susceptibles d'être déformées pour épouser une forme gauche (non plane).

La paroi 43 de fond du boîtier 21 peut présenter une épaisseur de l'ordre d'un ou plusieurs millimètre(s), et le boîtier 21 peut présenter une épaisseur 56 de l'ordre de 10 ou 20 millimètres.

Cette paroi 43 peut être réalisée en matière plastique, en particulier dans une matière plastique comportant une charge minérale sous forme de poudre ou de particules de petite taille.

Dans le mode de réalisation illustré figure 4, un aimant 61 est en partie au moins inclus dans la paroi 43, sur la face extérieure de laquelle l'aimant est sensiblement affleurant.

L'aimant permet de suspendre l'appareil 20 à une paroi 64 verticale incluant un inducteur 78 adapté pour alimenter l'appareil 20 par induction, comme illustré figures 4, 10, et 11.

A cet effet, la paroi comporte une structure métallique 65 disposée sensiblement affleurante à la face externe 66 de la paroi 64, et adaptée pour provoquer, lorsqu'elle est placée dans le champ magnétique de l'aimant 61, une force d'attraction mutuelle entre les parois 43 et 64 qui est suffisante pour compenser le poids de l'appareil 20.

Dans le mode de réalisation illustré figure 5, le boîtier de l'appareil 20 comporte une base 43 plane par laquelle l'appareil repose sur la face supérieure 86 d'un support 68 plan faisant partie d'un meuble 85, la base 43 incorporant l'induit 22.

Le boîtier comporte des parois opaques 42, 44 cerclant le guide 27 et renfermant, avec le guide, les circuits imprimés 40, 41 recevant les LEDs.

Le boîtier comporte également un bras 84 reliant la partie supérieure du boîtier - i.e. les parois 42, 44 - à la base 43. A l'intérieur du bras 84 cheminent des conducteurs 69 servant à relier l'induit 22 aux circuits imprimés 40, 41.

Dans ce mode de réalisation, les motifs 52 diffusants provoquent l'émission du flux lumineux 63 par les deux faces principales du guide.

Le support 68 sous lequel est collé l'inducteur 78 peut former une partie au moins du plateau horizontal d'un meuble 85 tel qu'une table ou un bureau.

La base 43 et/ou le support 68 peu(ven)t être réalisée(s) dans une matière plastique comportant une charge minérale telle que du quartz ou un hydrate d'alumine, ce qui permet de limiter l'échauffement des parois 43, 68 placées dans le champ magnétique produit par l'inducteur, sans affaiblir ou perturber ce champ magnétique, et permet le cas échéant de diffuser la chaleur produite par les LEDs.

Par exemple, la base et le support peuvent être fabriqués à partir de plaques de Corian® proposées par la société Du Pont de Nemours.

Par référence à la figure 7, le module d'alimentation - ou générateur - 70 comporte, à l'intérieur d'un boîtier 71, un convertisseur produisant un courant alternatif à une fréquence correspondant sensiblement à celle du circuit résonant de l'appareil à alimenter.

A cet effet, le convertisseur comporte un pont en « H » dont la branche centrale est constituée de l'inducteur 78 raccordé en série avec une capacité 79.

Les quatre interrupteurs 74 à 77 du pont en « H » peuvent être respectivement constitués de quatre transistors de type MOSFET.

La commande des transistors 74 à 77 est assurée par une unité de commande 72, telle qu'un microcontrôleur.

Le microcontrôleur 72 reçoit à cet effet les signaux/données délivré(e)s par un convertisseur 80 raccordé à un capteur 83 de courant sensible au courant traversant l'inductance 78, d'une part, et les signaux/données délivré(e)s par un autre convertisseur 81 servant à mesurer la tension dans le pont, d'autre part.

Selon une variante de réalisation non représentée, le capteur de courant 83 est inséré dans la branche centrale du pont en « H », entre la capacité 79 et l'inductance 78.

Selon une autre variante de réalisation non représentée, le pont en « H » peut être remplacé par un demi pont.

Le capteur de courant 83 peut être utilisé pour détecter les variations du courant traversant l'inductance 78 et pour en déduire la présence - ou l'absence - d'un induit dans le champ magnétique produit par l'inductance 78 ; il peut ainsi être utilisé pour détecter la présence d'un appareil à alimenter par induction.

Le microcontrôleur 72 est également relié à un transmetteur 82 radio, pour envoyer des données de commande à l'appareil 20 et/ou pour recevoir des données de commande émises par un appareil de télécommande du générateur 70.

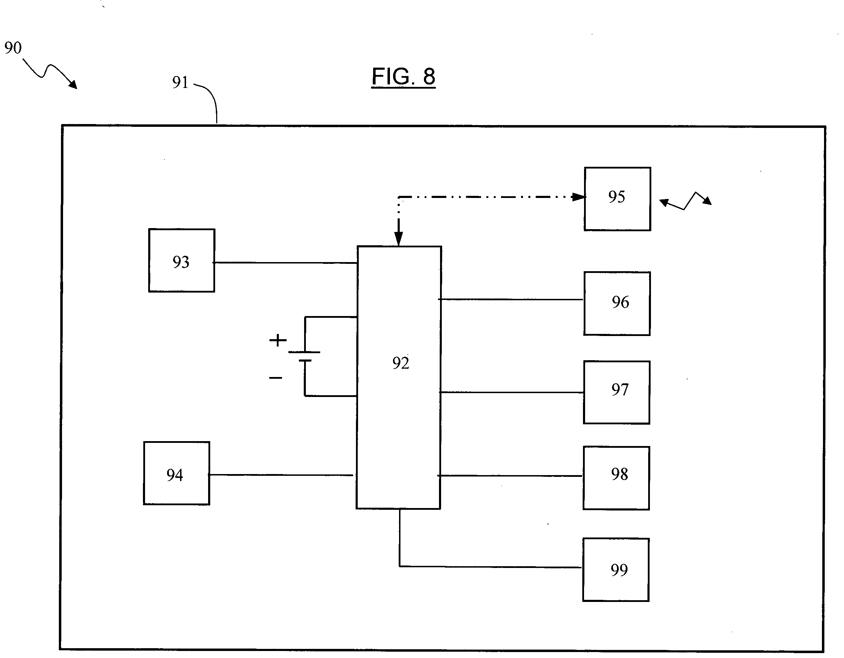

Par référence à la figure 8, l'appareil 90 de télécommande comporte, à l'intérieur d'un boîtier 91, une unité de commande 92, telle qu'un microcontrôleur, qui est relié à un afficheur 93 et à un clavier comportant au moins une touche 94 permettant la validation de choix faits par un utilisateur.

Le microcontrôleur 92 est également relié à un transmetteur 95 radio pour envoyer des données de commande à l'appareil 20 et/ou au générateur 70, ainsi qu'à une horloge 96.

Le microcontrôleur 92 est aussi relié à trois capteurs : un capteur 97 sensible à l'intensité (globale) du flux lumineux ambiant, i.e. du flux incident sur la télécommande 90 ; un capteur 98 sensible à plusieurs bandes spectrales du flux lumineux ambiant ; et un capteur 99 sensible aux mouvements du boîtier 91.

Le capteur 97 peut comporter une seule photodiode et le capteur 98 peut comporter plusieurs photodiodes ou groupes de photodiodes présentant des spectres de réception - de sensibilité - distincts.

L'unité de commande 92 peut être programmée pour émettre, par l'intermédiaire du transmetteur 95, des signaux de commande de l'appareil 20 d'éclairage, afin de faire varier le spectre ou l'intensité de la lumière émise par les LEDs de cet appareil, en fonction notamment des signaux qui lui sont délivrés par les photodiodes.

L'analyse de la lumière ambiante détectée par les photodiodes 97, 98 permet au microcontrôleur 92 de déterminer si le niveau et/ou le spectre d'éclairement requis par un utilisateur demande un éclairage complémentaire par les LEDs de l'appareil 20.

Notamment lorsqu'une seule photodiode est prévue, l'analyse des signaux délivrés par les photodiodes peut se faire « en intégrale », en utilisant par exemple un filtre correspondant à la sensibilité d'un oeil humain.

Lorsque plusieurs photodiodes sont prévues, l'analyse peut se faire « en colorimétrie », en comparant le niveau d'éclairement mesuré dans plusieurs bandes spectrales - i.e. plusieurs plages de longueurs d'onde - à des niveaux d'éclairement déterminés.

Des niveaux d'éclairement prédéterminés peuvent être enregistrés dans une mémoire et peuvent être lus par le microcontrôleur 92 pour assurer un éclairage selon un mode d'éclairage choisi par l'utilisateur. Le mode d'éclairage peut par exemple être choisi parmi un mode d'éclairage constant en lumière blanche, un mode d'éclairage d'intensité variable selon un cycle journalier, ou un mode d'éclairage intensif.

Afin que l'information transmise par les capteurs 97, 98 soit fiable, ceux-ci peuvent être associés à un (équipés d'un) masque permettant d'éviter un éclairement direct des capteurs par l'appareil 20 et/ou par un rayonnement solaire direct.

Dans le même but, les capteurs 97, 98 peuvent être associés à un organe optique leur assurant un large champ de « vision », à un filtre, ou à un verre dépoli.

Selon un mode de réalisation non représenté, les capteurs 97, 98 peuvent être intégrés à l'appareil d'éclairage 20 et reliés à l'unité de commande de cet appareil. Dans ce cas notamment, ces capteurs peuvent être en outre arrangés pour recevoir et détecter des signaux optiques de télécommande émis par un émetteur optique adapté intégré au dispositif 90 de télécommande.

Selon autre un mode de réalisation non représenté, les capteurs 97, 98 peuvent être intégrés à un meuble ou une structure comportant le circuit d'induction, et/ou au générateur 70.

Le capteur 99 de mouvement permet à l'unité de commande 92 de détecter des mouvements du boîtier 91 et de modifier en conséquence les signaux de commande délivrés par l'unité 92, comme décrit ci avant concernant le capteur 35 de mouvement intégré au boîtier de l'appareil 20.

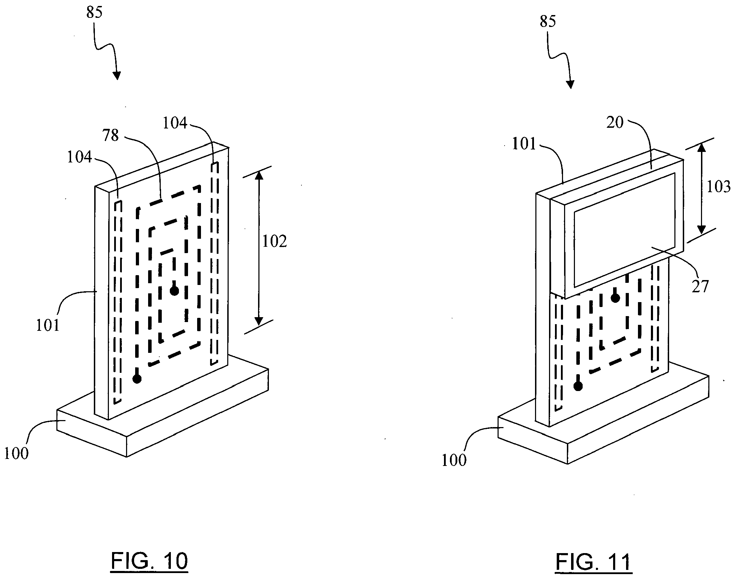

Par référence aux figures 10 et 11, le meuble 85 comporte un socle 100 par l'intermédiaire duquel le meuble peut reposer sur le sol par exemple, ainsi qu'un panneau 101 solidaire du socle et s'étendant verticalement à partir de ce dernier.

Un inducteur 78 conformé en spirale de contour rectangulaire, allongé verticalement, ainsi que deux armatures métalliques 104 en forme de barres verticales, sont disposés à l'intérieur du panneau 101.

Le socle 100 abrite un circuit (73 figure 1) d'alimentation de l'inducteur 78, le circuit (non représenté) étant relié aux deux bornes de l'inducteur. Les armatures magnétiques 104, qui s'étendent sensiblement sur toute la hauteur 102 de l'inducteur 78, permettent à un luminaire 20 (figure 11) dont la hauteur 103 est moindre que celle de l'inducteur et qui est équipé d'aimants adaptés, d'être suspendu au meuble 85 grâce à la force d'attraction mutuelle des aimants et des armatures 104, et ceci à différentes hauteurs le long de l'axe longitudinal vertical du panneau 101.

## Revendications

1. Meuble ou construction (85) comportant une paroi (64, 68, 101) apte à recevoir un appareil (20) sur sa face (66, 86) externe, une inductance (78) pour l'alimentation par induction de l'appareil (20), l'inductance (78) étant solidaire de la paroi (64, 68, 101) et s'étendant sensiblement parallèlement à la face (66, 86) externe de la paroi, l'inductance comportant des conducteurs (46 à 48) formant une spirale et revêtus d'un - ou noyés dans un - matériau électriquement isolant, caractérisé ou **caractérisée en ce que** les conducteurs (46 à 48) sont de section sensiblement rectangulaire et **en ce que** la paroi comporte un mélange de matière plastique et de particules minérales.

2. Meuble ou construction selon la revendication 1 dans lequel ou laquelle l'épaisseur (87) des conducteurs est située dans une plage allant de 0.2 millimètre environ jusqu'à 1 millimètre environ, en particulier de l'ordre de 0.3 à 0.6 millimètre.

3. Meuble ou construction selon l'une quelconque des revendications 1 ou 2 dans lequel ou laquelle la paroi est essentiellement constituée d'un mélange de résine acrylique et de particules minérales.

4. Meuble ou construction selon l'une quelconque des revendications 1 à 3 dans lequel ou laquelle la paroi est essentiellement constituée d'un mélange de matière plastique et de particules de quartz et/ou d'hydrate d'alumine.

5. Meuble ou construction selon l'une quelconque des revendications 1 à 4 dans lequel ou laquelle la paroi (64, 68, 101) s'étend sensiblement horizontalement.

6. Meuble ou construction selon l'une quelconque des revendications 1 à 4 dans lequel ou laquelle la paroi (64, 68, 101) s'étend sensiblement verticalement.

7. Meuble ou construction selon l'une quelconque des revendications 1 à 6 dans lequel ou laquelle la paroi (64, 68, 101) présente une épaisseur située dans une plage allant de 1 millimètre environ à 50 millimètres environ.

8. Meuble ou construction selon l'une quelconque des revendications 1 à 7 dans lequel ou laquelle la paroi comporte une structure magnétique (65, 104) disposée sensiblement affleurante à la face externe (66) de la paroi (64), et adaptée pour provoquer, lorsqu'elle est placée dans le champ magnétique d'un aimant (61) solidaire de l'appareil (20), une force d'attraction mutuelle entre l'appareil (20) et le meuble ou la construction (85).

9. Meuble ou construction selon l'une quelconque des revendications 1 à 8 dans lequel ou laquelle l'inductance est solidarisée à la paroi par collage.

10. Système d'alimentation par induction d'un appareil (20) conçu pour être alimenté par ce système, quel système comporte un meuble ou une construction selon l'une quelconque des revendications 1 à 9, et un générateur (73) arrangé pour alimenter l'inductance (78) du meuble ou de la construction (85).

11. Système selon la revendication 10 dans lequel le générateur comporte un pont ou un demi pont (74 à 79) dans lequel l'inductance (78) est raccordée en série avec une capacité (79), et une unité de commande (72) arrangée pour piloter les interrupteurs (74 à 77) du pont ou demi pont.

12. Système selon la revendication 11 dans lequel le générateur comporte un transmetteur (82) radio relié à l'unité de commande (72) et permettant à l'unité de commande de recevoir des données de commande du pont.

13. Système selon l'une quelconque des revendications 10 à 12 qui comporte un appareil (90) de télécommande du générateur (73) et/ou de l'appareil (20), qui comporte un ou plusieurs capteurs (97, 98) sensibles au flux lumineux incident ambiant, en particulier plusieurs capteurs (98) respectivement sensibles à différentes bandes spectrales du flux lumineux incident ambiant.

14. Système selon l'une quelconque des revendications 10 à 13 qui comporte un appareil (90) de télécommande du générateur (73) et/ou de l'appareil (20), qui comporte un capteur (99) de mouvement solidaire du boîtier (91) de l'appareil (90) de télé commande, qui permet de détecter des mouvements de l'appareil de (télé)commande et de modifier en conséquence les signaux de commande délivrés au générateur (73) et/ou à l'appareil (20).

15. Procédé de fabrication d'un meuble ou d'une construction (85) selon l'une quelconque des revendications 1 à 9, procédé dans lequel l'inductance (78) est obtenue par découpe ou gravure d'une feuille d'un matériau conducteur tel que du cuivre, puis en recouvrant la pièce ainsi obtenue dudit matériau électriquement isolant.

## Patentansprüche

1. Möbel- oder Konstruktionsstück (85) mit einer Wand (64, 68, 101), die an ihrer Außenseite (66, 86) ein Gerät (20) aufnehmen kann, und einer Induktivität(78) für die induktive Speisung des Geräts (20), wobei die Induktivität (78) mit der Wand (64, 68, 101) fest verbunden ist und sich im Wesentlichen parallel zu der Außenseite (66, 86) der Wand erstreckt, wobei die Induktivität Leiten (46 bis 48) umfasst die eine Spirale gekennzeichnet, dass die Leiter (46 bis 48) einen im Wesentlichen rechteckigen Querschnitt aufweisen und dass die Wand aus einer Mischung aus Kunststoffmaterial und Mineralpartikeln besteht.

2. Möbel- oder Konstruktionsstück nach Anspruch 1, bei dem die Dicke (87) der Leiter in einem Bereich von etwa 0,2 Millimeter bis etwa 1 Millimeter, insbesondere in einem Bereich von 0,3 bis 0,6 Millimeter, liegt.

3. Möbel- oder Konstruktionsstück nach einem der Ansprüche 1 oder 2, bei dem die Wand im Wesentlichen aus einer Mischung aus Acrylharz und Mineralpartikeln besteht.

4. Möbel- oder Konstruktionsstück nach einem der Ansprüche 1 bis 3, bei dem die Wand im Wesentlichen aus einer Mischung aus Kunststoffmaterial und Partikeln aus Quarz und/oder Aluminiumoxidhydrat besteht.

5. Möbel- oder Konstruktionsstück nach einem der Ansprüche 1 bis 4, bei dem sich die Wand (64, 68, 101) im Wesentlichen horizontal erstreckt.

6. Möbel- oder Konstruktionsstück nach einem der Ansprüche 1 bis 4, bei dem sich die Wand (64, 68, 101) im Wesentlichen vertikal erstreckt.

7. Möbel- oder Konstruktionsstück nach einem der Ansprüche 1 bis 6, bei dem die Wand (64, 68, 101) eine Dicke in einem Bereich von etwa 1 mm bis etwa 50 mm aufweist.

8. Möbel- oder Konstruktionsstück nach einem der Ansprüche 1 bis 7, bei dem die Wand eine magnetische Struktur (65, 104) aufweist, die im Wesentlichen flächenbündig zur Außenseite (66) der Wand (64) angeordnet und so ausgelegt ist, dass sie, wenn sie in das Magnetfeld eines mit dem Gerät (20) fest verbundenen Magneten (61) gebracht wird, eine gegenseitige Anziehungskraft zwischen dem Gerät (20) und dem Möbel- oder Konstruktionsstück (85) bewirkt.

9. Möbel- oder Konstruktionsstück nach einem der Ansprüche 1 bis 8, bei dem die Induktivität durch Verklebung mit der Wand verbunden ist.

10. System zur induktiven Speisung eines Geräts (20), welches so ausgelegt ist, dass es durch dieses System gespeist wird, wobei das System ein Möbel- oder Konstruktionsstück nach einem der Ansprüche 1 bis 9 und einen Generator (73) umfasst, welcher so angeordnet ist, dass er die Induktivität (78) des Möbel- oder Konstruktionsstücks (85) speist.

11. System nach Anspruch 10, bei dem der Generator eine Brücke oder Halbbrücke (74 bis 79), in der die Induktivität (78) mit einer Kapazität (79) in Reihe geschaltet ist, und eine Steuereinheit (72) aufweist, die so angeordnet ist, dass sie die Schalter (74 bis 77) der Brücke oder Halbbrücke ansteuert.

12. System nach Anspruch 11, bei dem der Generator einen Funksender (82) umfasst, der mit der Steuereinheit (72) verbunden ist und es der Steuereinheit ermöglicht, Steuerdaten von der Brücke zu empfangen.

13. System nach einem der Ansprüche 10 bis 12, das ein Gerät (90) zur Fernsteuerung des Generators (73) und/oder des Geräts (20) umfasst, das einen oder mehrere Sensoren (97, 98) umfasst, die auf den einfallenden Umgebungslichtstrom reagieren, insbesondere mehrere Sensoren (98), die jeweils auf verschiedene Spektralbänder des einfallenden Umgebungslichtstroms reagieren.

14. System nach einem der Ansprüche 10 bis 13, das ein Gerät (90) zur Fernsteuerung des Generators (73) und/oder des Geräts (20) aufweist, das einen fest mit dem Gehäuse (91) des Fernsteuergeräts (90) verbundenen Bewegungssensor (99) aufweist, mit dem Bewegungen des (Fern-)Steuergeräts erfasst und die dem Generator (73) und/oder dem Gerät (20) zugeführten Steuersignale entsprechend verändert werden können.

15. Verfahren zur Herstellung eines Möbel- oder Konstruktionsstücks (85) nach einem der Ansprüche 1 bis 9, bei dem die Induktivität (78) durch Schneiden oder Gravieren einer Platte aus einem leitenden Material wie Kupfer und anschließendes Bedecken des so erhaltenen Stücks mit dem genannten elektrisch isolierenden Material erhalten wird.

## Claims

1. A piece of furniture or a building (85) including a wall (64, 68, 101) suitable for receiving an appliance (20) on its outer face (66, 86), and an inductor (78) for inductively powering the appliance (20), the inductor (78) being secured to the wall (64, 68, 101) and extending substantially parallel to the outer face (66, 86) of the wall, the inductor comprising conductors (46 to 48) forming a spiral and coated or embedded in an electrically insulating material, the piece of furniture or the building being **characterized in that** the conductors (46 to 48) are of substantially rectangular section and **in that** the wall comprises a mixture of plastics material and of mineral particles.

2. A piece of furniture or a building according to claim 1, wherein the thickness (87) of the conductors lies in a range of approximately 0.2 millimeters (mm) to approximately 1 mm, and is in particular about 0.3 mm to 0.6 mm.

3. A piece of furniture or a building according to claim 1 or claim 2 wherein the wall is constituted essentially by a mixture of acrylic resin and of mineral particles.

4. A piece of furniture or a building according to any one of claims 1 to 3 wherein the wall is constituted essentially by a mixture of plastics material and of particles of quartz and/or of alumina hydrate.

5. A piece of furniture or a building according to any one of claims 1 to 4 wherein the wall (64, 68, 101) extends substantially horizontally.

6. A piece of furniture or a building according to any one of claims 1 to 4 wherein the wall (64, 68, 101) extends substantially vertically.

7. A piece of furniture or a building according to any one of claims 1 to 6 wherein the wall (64, 68, 101) presents thickness lying in the range approximately 1 mm to approximately 50 mm.

8. A piece of furniture or a building according to any one of claims 1 to 7 wherein the wall includes a magnetic structure (65, 104) arranged substantially flush with the outer face (66) of the wall (64) and adapted, when placed in the magnetic field of a magnet (61) secured to the appliance (20), to give rise to a force of mutual attraction between the appliance (20) and the piece of furniture or the building (85).

9. A piece of furniture or a building according to any one of claims 1 to 8 wherein the inductor is secured to the wall by adhesive.

10. A system for inductively powering an appliance (20) designed to be powered by the system, which system includes a piece of furniture or a building according to any one of claims 1 to 9, and a power supply (73) arranged to power the inductor (78) of the piece of furniture or of the building (85).

11. A system according to claim 10, wherein the power supply comprises a bridge or a half-bridge (74 to 79) in which the inductor (78) is connected in series with a capacitor (79), and a control unit (72) arranged to control the switches (74 to 77) of the bridge or half-bridge.

12. A system according to claim 11, wherein the power supply includes a radio transceiver (82) connected to the control unit (72) and enabling the control unit to receive control data for the bridge.

13. A system according to any one of claims 10 to 12 including a remote-control appliance (90) for remotely controlling the power supply (73) and/or the appliance (20), which remote-control appliance (90) includes one or more sensors (97, 98) sensitive to ambient incident light flux, and in particular a plurality of sensors (98) sensitive to respective different spectral bands of the ambient incident light flux.

14. A system according to any one of claims 10 to 13 including a remote-control appliance (90) for remotely controlling the power supply (73) and/or the appliance (20), which remote-control appliance includes a movement sensor (99) secured to the housing (91) of the remote-control appliance (90), enabling movements of the (remote)-control appliance to be detected, and enabling the control signals delivered to the power supply (73) and/or to the appliance (20) to be modified accordingly.

15. A method of constructing a piece of furniture or a building (85) according to any one of claims 1 to 9, in which method the inductor (78) is obtained by cutting out or etching a sheet of conductive material such as copper, and then by covering the part obtained in that way in said electrically insulating material.
